# EUROPEAN PATENT SPECIFICATION

(11) **EP 2 339 873 B1**
(45) Date of publication and mention of the grant of the patent: **01.11.2017**
(21) Application number: 09813961.1
(22) Date of filing: 07.08.2009
(51) Int. Cl.: H04M 3/42, H04M 3/02, H04L 29/06, H04M 3/493

(54) **SYSTEM FOR COLOR RING USER SELF-SERVER SERVICE AND REALIZATION METHOD THEREOF**
SYSTEM FÜR SELBSTBEDIENUNGDIENST FÜR FARBRUFTONNUTZER UND AUSFÜHRUNGSVERFAHREN DAFÜR
SYSTÈME DE SERVICE DE SERVEUR PROPRE D'UTILISATEUR DE SONNERIE PERSONNALISÉE ET SON PROCÉDÉ DE RÉALISATION

(30) Priority: 18.09.2008 CN 200810216165
(43) Date of publication of application: 29.06.2011
(73) Proprietor: ZTE Corporation, Shenzhen, Guangdong 518057 (CN)
(72) Inventor: GE, Hao, Shenzhen Guangdong 518057 (CN); SHEN, Song, Shenzhen Guangdong 518057 (CN); REN, Yingying, Shenzhen Guangdong 518057 (CN)
(74) Representative: Persson, Albin
(86) International application number: PCT/CN2009/000899
(87) International publication number: WO 2010/031240

(56) References cited:
- CN-A- 1 564 172
- CN-A- 101 026 650
- CN-A- 101 079 933
- US-A1- 2006 285 532

## Description

### Technical Field

The present invention relates to telecommunications value-added services, and in particular, to an IP color ring user self-serving system and its realization method.

### Background of the Invention

BICC (Bearer Independent Call Control) protocol made by the ITU-TSG11 group is a call control protocol independent of the bearer. A main characteristic of the BICC protocol is that the CSF (Call Service Function) and the BCF (Bearer Control Function) are separated so that the call control signaling can be born on all kinds of networks, including the MTP (Message Transfer Part), SS7 network, ATM network, and IP network. The BICC protocol is evolved from the ISUP (ISDN User Part) protocol and is an important tool supporting the evolution from a traditional telecommunications network to an integrated multi-service network.

The CSF of BICC has defined the following four types:
Call Service Nodal Function (CSF-N), mainly including the CSF peer of a narrowband service and the same layer in ISN;
Call Service Transit Function (CSF-T), mainly including the bearer service transit function for establishing and maintaining the backbone network calls and the signaling relay between other CSF peer layers in TSN, and invoking the Bearer Control Transit Function (BCF-T) for transferring narrowband bearer services in the backbone network;
Call Service Gateway Function (CSF-G), mainly including the bearing service transit function for establishing and maintaining the backbone network calls and the signaling relay between its CSF peer layers, and invoking the Bearer Control Gateway Function (BCF-G) for transferring narrowband bearer services in the backbone network;
Call Service Coordination Function (CSF-C), including coordination functions for coordinating calls and establishing and maintaining backbone network calls related to signaling relay between SCF peer layers.

The BCF of BICC has defined the following five types:
Bearer Control Joint Function (BCF-J), providing the control and communication capabilities of the bearer switch functions of two associated CSFs as well as the signaling capability for establishing and releasing a backbone network connection;
Bearer Control Gateway Function (BCF-G), providing the control and communication capabilities of the bearer switch function of its associated CSF-G as well as the signaling capability for establishing and releasing a backbone network connection;
Bearer Control Nodal Function (BCF-N), providing the control and communication capabilities of the bearer switch function of its associated CSF as well as the signaling capability for establishing and releasing the connection to the peer (BCF-N) backbone network;
Bearer Control Relay Function (BCF-R), controlling the bearer switch function and relaying a bearer control signaling request to the next BCF, so as to accomplish an edge-to-edge backbone connection;
Bearer Control Transit Function (BCF-T), providing the control and communication capabilities of the bearer switch function of its associated CSF-T as well as the signaling capability for establishing and releasing a backbone network connection.

As disclosed by CN1564172A, Color ring services include a user self-serving service in which the user could access a color ring self-serving system by dialing a special number, subscribe and unsubscribe to services, and subscribe to and set a color ring tone etc. according to voice prompt. It is convenient for users to manage color ring services through such self-serving service.

US2006/285532A1 also discloses an automated ringback update system for customizing ringback signals. Communications devices activate and interact with the automated ringback update system via the recognition of a feature associated with a printed matter to allow for modifications of the network service.

At present, domestic and overseas core networks are in a process of IP transformation in which the BICC protocol is a main body. As an important value-added service, the color ring service is being IP transformed. And as a special color ring service, the user self-serving service is facing this transformation too. However, neither US2006/285532A1 nor CN1564172A teaches how to realize the color ring service over IP.

### Summary of the Invention

The technical problem to be solved by the present invention is to provide a system for IP color ring self-serving service and a realization method thereof, so as to implement the user self-serving service in the IP color ring system, thereby adapting to the development of times and offering better services.

The features of the method and system according to the present invention are defined in the independent claims, and the preferable features according to the present invention are defined in the dependent claims.

With the present invention, the IP color ring user self-serving service with the BICC protocol as a main body can be conveniently implemented, thereby providing new profit growth point for the operators.

### Brief Description of the Drawings

FIG. 1 is a general structural diagram of the self-serving service system in accordance with the present invention;
FIG. 2 is a flow chart of the IP color ring user self-serving in accordance with the present invention;
FIG. 3 is a flow chart of user pressed key processing in accordance with a first preferred embodiment of the present invention;
FIG. 4 is a flow chart of user pressed key processing in accordance with a second preferred embodiment of the present invention.

### Preferred Embodiments of the Present Invention

The system structure and service process of the present invention are described in detail below in conjunction with the drawings and preferred embodiments.

### 1. System

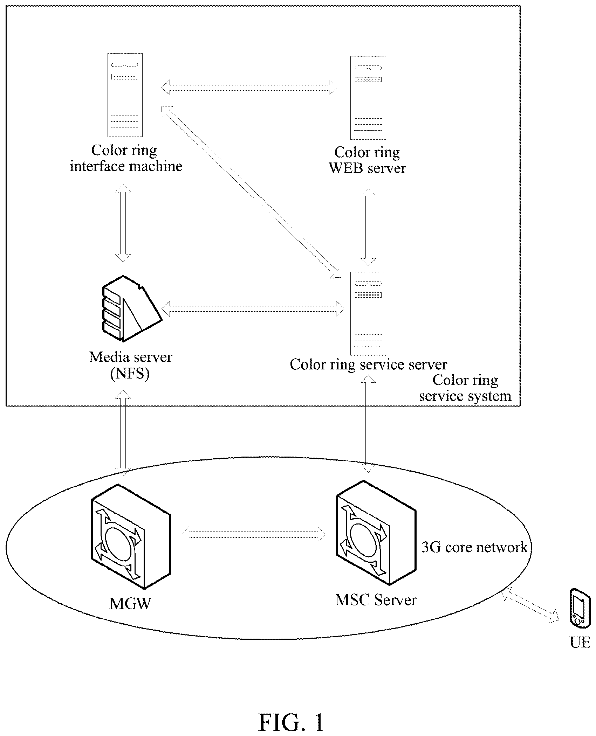

As shown in FIG. 1, the method for IP color ring user self-serving service in accordance with the present invention includes:
a color ring service system, including a color ring service server, a color ring WEB server, a color ring interface machine, and a media server (NFS).

The color ring service server implements most of the call service functions, mainly including interacting with BICC signaling of the counterpart, controlling the service logic of the color ring service, storing and querying service data, and controlling the media server etc., and also provides an interface with the WEB server to allow the operator or terminal user to perform authorized customization and modification of the service data of the color ring service server, and further provides the service logic for color ring user self-serving.

The color ring WEB server provides a communication interface for the operator or user through WEB, mainly responsible for managing the customization and modification of the color ring service data and upload of color ring files, and also responsible for the operations such as previewing, subscribing to and setting color rings of the color ring users.

The color ring interface machine mainly includes a color ring core interface machine, a color ring file uploading interface machine and a short message interface machine. The color ring core interface machine sends the operations such as preview, subscription and setting performed by the users to a color ring management service for processing, the color ring file uploading interface machine sends color ring files uploaded through WEB to a color ring resource server, and the short message interface machine enables the color ring system to access a short message center.

The media server (NFS) implements part of the call service functions, that is, interacts with control signaling of the color ring service server and implements the bearer control function, including negotiating with the counterpart bearer about playback of audio files according to a predetermined mode, and its NFS storing the uploaded color ring resource files.

The user equipment (UE), mainly the calling terminals herein, can be of any type, such as PSTN users, GSM users, and 3G users etc.

The 3G core network refers to 3G core network equipment related to color ring call and mainly includes a MSC (Mobile Switching Center) Server and a MGW (Media Gateway).

The MSC Server mainly implements part of the call service functions, and is responsible for communicating with the color ring service server, where the interface between them is called Nc interface in the 3GPP specifications, and the communication protocol is the BICC protocol.

The MGW mainly implements part of the call service functions and bearer control functions, and is responsible for communication with the media server, where the interface between them is called Nb interface in the 3GPP specifications, and the communication protocol is IuUP (Iu User Plane). The IuUP protocol is defined on an upper layer of the RTP (Real-time Transport Protocol). It can provide functions such as initialization, rate control, time stamping and error handling etc.

### 2. Process

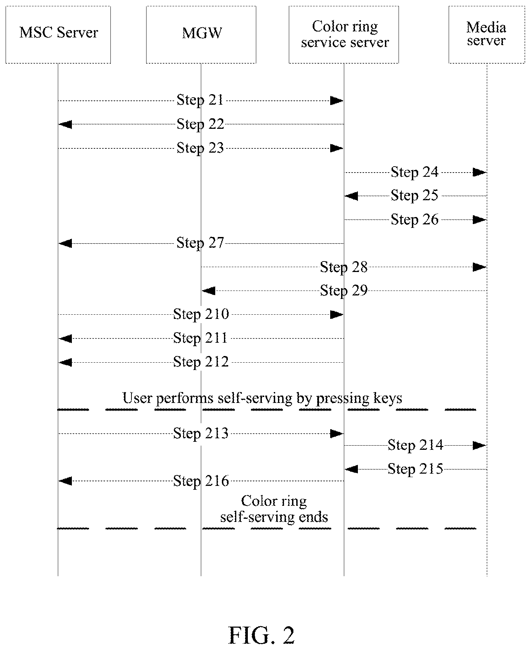

The method for IP color ring user self-serving service is shown in FIG. 2. The calling and called terminals may be 2G or 3G users. The following steps are mainly involved in a color ring call:
Step 21, a user initiates a call; the MSC Server sends a BICC protocol IAM message, which contains an encoding and decoding list supported by the user plane, to the color ring service server according to number analysis.
Step 22, the color ring service server returns a BICC protocol APM message, which contains a selected encoding and decoding type of the user plane, to the MSC Server to inform the core network of the calling side that this encoding and decoding type should be used in voice transfer.
Step 23, the MSC Server sends a BICC protocol APM message to the color ring service server, the message containing the media information sdpA (mainly specifying the information such as the IP address, port and the encoding type used etc. for media playing and receiving) of the MGW.
Step 24, the color ring service server triggers the user self-serving service, queries the information of the calling user, sends a SIP protocol Invite message, which contains the media information sdpA, to the media server to set up a connection with the media server.
Step 25, after media negotiation, the media server returns a SIP protocol 200 OK message to the color ring service server, the message containing media information sdpB (mainly specifying the information such as the IP address, port and the encoding type used etc. for media playing and receiving).
Step 26, the color ring service server sends a SIP protocol ACK message to the media server to indicate that it has received the 200 OK message.
Step 27, the color ring service server sends a BICC signaling APM message to the MSC Server, the message containing the media information sdpB of the media server.
Step 28, the MGW sends an IuUP protocol Initialization message to the media server according to the result of the previous media negotiation, the message specifying information such as media stream encoding mode and rate etc.
Step 29, the media server returns an IuUP protocol ACK to the MGW to indicate that it has received the message and accepts the used encoding mode and rate.
Step 210, the MSC Server sends a BICC protocol COT message to the color ring service server to indicate that setup of the user plane bearer is completed.
Step 211, the color ring service server sends a BICC protocol ACM message to the MSC Server to indicate that playback is ready.
Step 212, the color ring service server sends a BICC protocol ANM message to the MSC Server to indicate that the color ring service server replies as the called user. The calling user starts to hear the color ring self-serving prompt tone, and performs key pressing operation according to the prompt tone; the color ring service server processes according to the pressed keys after receiving the pressed key information.
Step 213, the calling user hangs up; the MSC Server sends a BICC protocol REL message to the color ring service server.
Step 214, the color ring service server sends a SIP protocol BYE message to the media server to request stopping playback and releasing the resource.
Step 215, the media server releases the resource, and returns a SIP protocol 200 OK message to the color ring service server.
Step 216, the color ring service server returns a BICC protocol RLC message to the MSC Server to indicate that the call is released. By then, the color ring user self-serving service ends.

Wherein, in the step 212, there are two ways for the color ring service server to receive pressed key information of the user: the pressed key information may be sent to the media server through a media stream and then reported by the media server to the color ring service server; or the pressed key information may be sent to the color ring service server via BICC signaling.

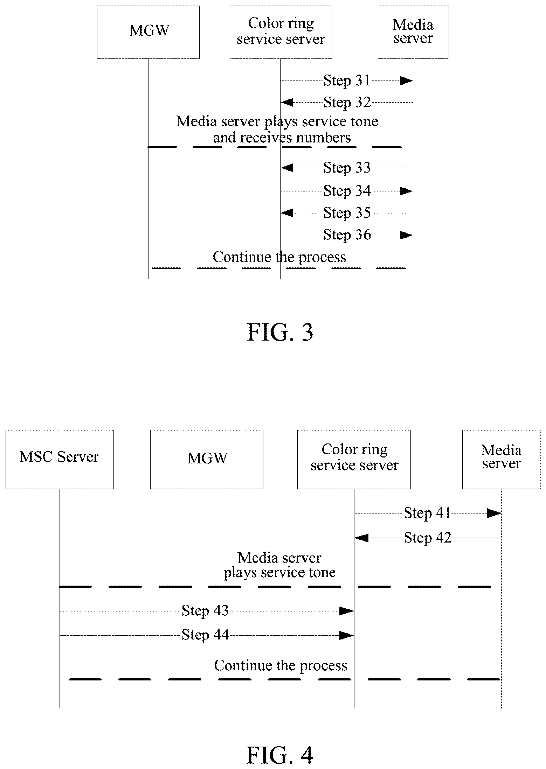

The first way is shown in FIG. 3, which mainly involves the following steps:
Step 31, the color ring service server sends a SIP protocol INFO message to the media server according to the service logic to instruct the media server to play back and receive numbers.
Step 32, the media server starts to play back and receive numbers, and returns a SIP protocol 200 OK message to the color ring service server. The user hears the prompt and presses keys according to the prompt; the pressed key information is sent by the MGW to the media server through a media stream.
Step 33, the media server sends a SIP protocol INFO message to the color ring service server, the message containing the received number.
Step 34, the color ring service server returns a SIP protocol 200 OK message to the media server.
Step 35, the media server sends a SIP protocol INFO message to the color ring service server to indicate that the playback ends.
Step 36, the color ring service server returns a SIP protocol 200 OK message to the media server. The color ring service server proceeds to Steps 31 to 36 after logical processing according to the pressed key information.

The second way is shown in FIG. 4, which mainly involves the following steps:
Step 41, the color ring service server sends a SIP protocol INFO message to the media server according to the service logic to instruct the media server to play back.
Step 42, the media server starts to play back, and returns a SIP protocol 200 OK message to the color ring service server. The user hears the prompt and presses keys according to the prompt.
Step 43, the MSC server sends a BICC protocol APM message to the color ring service server, the message containing the pressed key information.
Step 44, the MSC server sends a BICC protocol APM message to the color ring service server, the message containing the information that the key pressing ends. The color ring service server proceeds to Steps 41 to 44 after logical processing according to the pressed key information.

The above content is a detailed description of the present invention in conjunction with particular preferred embodiments, and it shall not be considered that the particular implementation of the present invention is limited to this description. The scope of protection is defined only by the appended independent claims.

### Industrial Applicability

With the present invention, the IP color ring user self-serving service with the BICC protocol as a main body can be conveniently implemented, thereby providing new profit growth point for the operators.

## Claims

1. A method for implementing a color ring user self-serving service over IP utilizing a Bearer Independent Call Control, BICC, protocol, comprising the following steps of:
1) user equipment initiating a self-serving service call to a core network device;
2) the core network device receiving the self-serving service call, analyzing information of the self-serving service call, and setting up a connection with a color ring service system;
3) triggering the self-serving service on the color ring service system, executing a media negotiation process with the core network device, and sending a self-serving service prompt tone to the user equipment via the core network device (21-211);
4) the user equipment receiving the self-serving service prompt tone, executing service operation, and sending content of the service operation to the color ring service system via the core network device;
5) the color ring service system receiving and processing the content of the service operation (212);
6) the user equipment hanging up; and
7) the core network device releasing the connection with the color ring service system (213);
wherein the core network device comprises a Mobile Switching Center, MSC, server and a media gateway, MGW; the color ring service system comprises a color ring service server and a media server; the MSC server communicate with the color ring service server utilizing the BICC protocol via a Nc interface; and the step of executing the media negotiation process with the core network device comprises a negotiation of a stream encoding mode and rate (28,29) between the MGW and the media server utilizing Iu User Plan protocol via a Nb interface.

2. The method as claimed in claim 1, wherein in the step 3),
in the step of triggering the self-serving service, the self-serving service is triggered according to a color ring service access code.

3. The method as claimed in claim 1 or 2, wherein the step 4) comprises the following steps of:
41) the user equipment receiving the self-serving service prompt tone and performing key pressing operation (32);
42) reporting pressed key information to the color ring service system by a media stream (32); and
43) the color ring service system executing service logic according to the pressed key information (36).

4. The method as claimed in claim 1 or 2, wherein the step 4) comprises the following steps of:
41') the user equipment receiving the self-serving service prompt tone and performing key pressing operation (42);
42') reporting pressed key information to the color ring service system by BICC signaling (43); and
43') the color ring service system executing service logic according to the pressed key information (44).

5. A color ring service system configured to support implementation of a color ring user self-serving service over IP utilizing a Bearer Independent Call Control, BICC, protocol, wherein the color ring service system is provided with means configured to set up a connection with a core network device when the self-serving service is required, trigger the self-serving service, perform media negotiation with the core network device, send a self-serving service prompt tone to the user equipment via the core network device, receive and process content of service operation executed by the user equipment, and send the processed service operation content to the user equipment via the core network device; wherein the color ring service system comprises:
a color ring service server, configured to set up a communication connection with a MSC server of the core network device utilizing the BICC protocol via a Nc interface, implement call service functions, and provide a service logic of the user equipment; and
a media server, configured to perform media negotiation of a stream encoding mode and rate with a media gateway of the core network device utilizing an Iu User Plan protocol via a Nb interface.

6. The color ring service system as claimed in claim 5, wherein the color ring service system also comprises:
a color ring WEB server, configured to provide a communication interface for an operator or user through WEB; and
a color ring interface machine, configured to provide a service core interface, a file uploading interface or short message interface.

7. A core network device for implementing a color ring user self-serving service over IP utilizing a Bearer Independent Call Control, BICC, protocol, provided with means configured to receive a self-serving service call request sent from user equipment, set up a connection with a color ring service system, perform media negotiation with the color ring service system, forward a self-serving service prompt tone sent from the color ring service system to the user equipment, forward content of service operation of the user equipment to the color ring service system after the user equipment executes the service operation, and forward the service operation content processed by the color ring service system to the user equipment after the color ring service system processes the service operation content, and release the connection with the color ring service system after the user equipment hangs up;
wherein the core network device comprises:
a MSC server, configured to set up a communication connection with the color ring service system via a Nc interface and communicate with the color ring service system utilizing the BICC protocol; and
a media gateway, configured to perform media negotiation of a stream encoding mode and rate with the color ring service system utilizing an Iu User Plan protocol via a Nb interface.

## Patentansprüche

1. Verfahren zum Implementieren eines Farbring-Benutzerselbstbedienungsdienstes über IP unter Verwendung eines Bearer Independent Call Control (BICC) Protokolls das folgende Schritte aufweist:
1) ein Endgerät startet einen Selbstbedienungsdienstanruf an eine Kernnetzwerkeinrichtung;
2) die Kernnetzwerkeinrichtung empfängt den Selbstbedienungsdienstanruf, analysiert die Daten des Selbstbedienungsdienstanrufs und baut eine Verbindung mit einem Farbring-Dienstesystem auf;
3) Auslösen des Selbstbedienungsdienstes auf dem Farbring-Dienstesystem, Ausführen eines Medienverhandlungsprozesses mit der Kernnetzwerkeinrichtung, und Senden eines Selbstbedienungsdienst-Aufforderungstons an das Endgerät über die Kernnetzwerkeinrichtung (21-211);
4) das Endgerät empfängt den Selbstbedienungsdienst-Aufforderungston, führt den Dienstvorgang aus und sendet den Inhalt des Dienstvorgangs an das Farbring-Dienstesystem über die Kernnetzwerkeinrichtung;
5) das Farbring-Dienstesystem empfängt und verarbeitet den Inhalt des Dienstvorgangs (212);
6) das Endgerät beendet die Verbindung; und
7) die Kernnetzwerkeinrichtung gibt die Verbindung mit dem Farbring-Dienstesystem frei (213);
wobei die Kernnetzwerkeinrichtung einen Mobile Switching Center (MSC) Server und ein Media Gateway (MGW) aufweist; wobei das Farbring-Dienstesystem einen Farbring-Diensteserver und einen Medienserver aufweist; wobei der MSC Server mit dem Farbring-Diensteserver unter Verwendung des BICC Protokolls über eine Nc Schnittstelle kommuniziert; und wobei der Schritt des Ausführens des Medienverhandlungsprozesses mit der Kernnetzwerkeinrichtung eine Verhandlung eines Datenstromverschlüsselungsmodus und einer Datenstromverschlüsselungsrate (28, 29) zwischen dem MGW und dem Mediaserver unter Verwendung des lu User Plan Protokolls über eine Nb Schnittstelle aufweist.

2. Verfahren nach Anspruch 1, wobei in Schritt 3) in dem Schritt des Auslösens des Selbstbedienungsdienstes der Selbstbedienungsdienst gemäß eines Farbringdienstes-Zugangscodes ausgelöst wird.

3. Verfahren nach Anspruch 1 oder 2, wobei der Schnitt 4) folgende Schritte aufweist:
41) das Endgerät empfängt den Selbstbedienungsdienst-Aufforderungston und führt einen Tastendruckvorgang durch (32);
42) Berichten der gedrückten Tastendaten an das Farbring-Dienstesystem durch einen Mediendatenstrom (32); und
43) das Farbring-Dienstesystem führt eine Dienstelogik gemäß den gedrückten Tastendaten durch (36).

4. Verfahren nach Anspruch 1 oder 2, wobei der Schnitt 4) folgende Schritte aufweist:
41') das Endgerät empfängt den Selbstbedienungsdienst-Aufforderungston und führt einen Tastendruckvorgang durch (42);
42') Berichten der gedrückten Tastendaten an das Farbring-Dienstesystem mittels einer BICC Signalisierung (43); und
43') das Farbring-Dienstesystem führt eine Dienstelogik gemäß den gedrückten Tastendaten durch (44).

5. Farbring-Dienstesystem, das dazu eingerichtet ist, die Implementierung eines Farbring-Benutzerselbstbedienungsdienstes über IP unter Verwendung eines Bearer Independent Call Control (BICC) Protokolls zu unterstützen, wobei das Farbring-Dienstesystem mit Mitteln ausgestattet ist, die dazu eingerichtet sind, eine Verbindung mit einer Kernnetzwerkeinrichtung aufzubauen, wenn der Selbstbedienungsdienst angefordert wird, den Selbstbedienungsdienst auszulösen, die Medienverhandlung mit der Kernnetzwerkeinrichtung durchzuführen, einen Selbstbedienungsdienst-Aufforderungston an das Endgerät über die Kernnetzwerkeinrichtung zu senden, den Inhalt eines Dienstvorgangs zu empfangen und zu verarbeiten, der durch das Endgerät ausgeführt wird, und den verarbeiteten Dienstvorgangsinhalt an das Endgerät über die Kernnetzwerkeinrichtung zu senden;
wobei das Farbring-Dienstesystem aufweist:
einen Farbring-Dienstserver, der dazu eingerichtet ist, eine Datenkommunikationsverbindung mit einem MSC-Server der Kernnetzwerkeinrichtung unter Verwendung des BICC-Protokolls über eine Nc Schnittstelle aufzubauen, Anrufdienstefunktionen zu implementieren und eine Dienstelogik des Endgeräts bereitzustellen; und
einen Mediaserver, der dazu eingerichtet ist, Medienverhandlungen eines Datenstromverschlüsselungsmodus und einer Datenstromverschlüsselungsrate mit einem Medien Gateway der Kernnetzwerkeinrichtung unter Verwendung eines lu User Plan Protokolls über eine Nb Schnittstelle durchzuführen.

6. Farbring-Dienstesystem nach Anspruch 5, wobei das Farbring-Dienstesystem ebenfalls aufweist:
einen Farbring-WEB-Server, der dazu eingerichtet ist, einen Datenkommunikationsschnittstelle für einen Bediener oder einen Benutzer über das WEB bereitzustellen; und
eine Farbring Schnittstellenmaschine, die dazu eingerichtet ist, eine Dienstekernschnittstelle, eine Datenhochladeschnittstelle oder eine Kurznachrichtenschnittstelle bereitzustellen.

7. Kernnetzwerkeinrichtung zur Implementierung eines Farbring-Benutzerselbstbedienungsdienstes über IP unter Verwendung eines Bearer Independent Call Control (BICC) Protokolls, das mit Mitteln versehen ist, die dazu eingerichtet sind, um eine Selbstbedienungsdienst-Anrufaufforderung zu empfangen, die von einem Endgerät gesendet wurde, eine Verbindung mit einem Farbring-Dienstesystem aufzubauen, Medienverhandlungen mit dem Farbring-Dienstesystem durchzuführen, einen Selbstbedienungsdienst-Aufforderungston weiterzuleiten, der von dem Farbring-Dienstesystem an das Endgerät gesendet wurde, Inhalt eines Dienstvorgangs des Endgeräts an das Farbring-Dienstesystem weiterzuleiten, nachdem das Endgerät den Dienstvorgang ausgeführt hat, und den Dienstvorgangsinhalt, der durch das Farbring-Dienstesystem verarbeitet wurde, an das Endgerät weiterzuleiten, nachdem das Farbring-Dienstesystem den Dienstvorgangsinhalt verarbeitet hat, und die Verbindung mit dem Farbring-Dienstesystem freizugeben, nachdem das Endgerät von der Verbindung getrennt wurde;
wobei die Kernnetzwerkeinrichtung aufweist:
einen MSC Server, der dazu eingerichtet ist, eine Datenkommunikationsverbindung mit dem Farbring-Dienstesystem über eine Nc Schnittstelle aufzubauen und mit dem Farbring-Dienstesystem unter Verwendung des BICC Protokolls zu kommunizieren; und
ein Media Gateway, das dazu eingerichtet ist, Medienverhandlungen eines Datenstromverschlüsselungsmodus und einer Datenstromverschlüsselungsrate mit dem Farbring-Dienstesystem unter Verwendung eines lu User Plan Protokolls über eine Nb Schnittstelle durchzuführen.

## Revendications

1. Procédé pour mettre en oeuvre un service d'utilisateur autonome d'une sonnerie à indication de couleurs sur IP en utilisant un protocole de contrôle d'appel indépendant du support, BICC (Bearer Independent Call Control), comprenant les étapes suivantes :
1) l'équipement de l'utilisateur lance un appel de service autonome à un dispositif du réseau central ;
2) le dispositif du réseau central reçoit l'appel de service autonome, analyse les informations de l'appel de service autonome et met en place une connexion avec un système de service de sonnerie à indication de couleurs ;
3) le service autonome est déclenché sur le système de service de sonnerie à indication de couleurs, exécutant un processus de négociation des supports avec le dispositif du réseau central et envoie une tonalité d'invitation au service autonome à l'équipement de l'utilisateur par l'intermédiaire du dispositif du réseau central (21-211) ;
4) l'équipement de l'utilisateur reçoit la tonalité d'invitation au service autonome, exécute l'opération de service et envoie le contenu de l'opération de service au système de service de sonnerie à indication de couleurs par l'intermédiaire du dispositif du réseau central ;
5) le système de service de sonnerie à indication de couleurs reçoit et traite le contenu de l'opération de service (212) ;
6) l'équipement de l'utilisateur raccroche ; et
7) le dispositif du réseau central libère la connexion au système de service de sonnerie à indication de couleurs (213) ;
dans lequel le dispositif du réseau central comprend un serveur de centre de commutation mobile, MSC (Mobile Switching Center) et une passerelle de supports, MGW (Media Gateway) ; le système de service de sonnerie à indication de couleurs comprend un serveur du service de sonnerie à indication de couleurs et un serveur de supports ; le serveur MSC communique avec le serveur de service de sonnerie à indications de couleurs à l'aide du protocole BICC par l'intermédiaire d'une interface Nc ; et l'étape d'exécution du processus de négociation des supports avec le dispositif du réseau central comprend une négociation d'un mode de codage de flux et d'un tarif (28, 29) entre la MGW et le serveur de supports à l'aide du protocole du plan d'utilisateur Iu par l'intermédiaire d'une interface Nb.

2. Procédé selon la revendication 1, dans lequel, à l'étape 3), dans l'opération consistant à déclencher le service autonome, le service autonome est déclenché selon un code d'accès au service de sonnerie à indication de couleurs.

3. Procédé selon la revendication 1 ou 2, dans lequel l'étape 4) comprend les opérations suivantes :
41) l'équipement de l'utilisateur reçoit la tonalité d'invitation du service autonome et effectue l'opération de pression de touches (32) ;
42) les informations concernant les touches pressées sont signalées au système de service de sonnerie à indication de couleurs par un flux multimédia (32) ; et
43) le système de service de sonnerie à indication de couleurs exécute la logique de service en fonction des informations concernant les touches pressées (36).

4. Procédé selon la revendication 1 ou 2, dans lequel l'étape 4) comprend les étapes suivantes :
41') l'équipement de l'utilisateur reçoit la tonalité d'invitation du service autonome et effectue l'opération de pression de touches (42) ;
42') les informations concernant les touches pressées sont signalées au système de service de sonnerie à indication de couleurs par une signalisation BICC (43) ; et
43') le système de service de sonnerie à indication de couleurs exécute la logique de service en fonction des informations concernant les touches pressées (44).

5. Système de service de sonnerie à indication de couleurs configuré pour prendre en charge la mise en oeuvre d'un service autonome de sonnerie à indication de couleurs sur IP en utilisant un protocole de contrôle d'appel indépendant du support, BICC, dans lequel le système de service de sonnerie à indication de couleurs est équipé de moyens configurés pour établir une connexion avec un dispositif du réseau central lorsque le service autonome est nécessaire, déclencher le service autonome, effectuer une négociation des supports avec le dispositif du réseau central, envoyer une tonalité d'invitation au service autonome à l'équipement de l'utilisateur par l'intermédiaire du dispositif du réseau central, recevoir et traiter le contenu de l'opération de service exécutée par l'équipement de l'utilisateur, et envoyer le contenu de l'opération de service traitée à l'équipement de l'utilisateur par l'intermédiaire du dispositif du réseau central ;
dans lequel le système de service de sonnerie à indication de couleurs comprend :
un serveur de service de sonnerie à indication de couleurs, configuré pour établir une connexion de communication avec un serveur MSC du dispositif du réseau central à l'aide du protocole BICC par l'intermédiaire d'une interface Nc, mettre en oeuvre des fonctions de service d'appel et fournir une logique de service de l'équipement de l'utilisateur ; et
un serveur multimédia, configuré pour effectuer une négociation multimédia d'un mode de codage de flux et d'un tarif avec une passerelle multimédia du dispositif du réseau central à l'aide d'un protocole de plan d'utilisateur Iu par l'intermédiaire d'une interface Nb.

6. Système de service de sonnerie à indication de couleurs selon la revendication 5, dans lequel le système de service de sonnerie à indication de couleurs comprend également :
un serveur WEB de sonnerie à indication de couleurs, configuré pour fournir une interface de communication pour un opérateur ou un utilisateur à travers le WEB ; et
une machine d'interface de sonnerie à indication de couleurs, configurée pour fournir une interface centrale de service, une interface de téléchargement de fichiers ou une interface pour les messages courts.

7. Dispositif du réseau central pour mettre en oeuvre un service d'utilisateur autonome de sonnerie à indication de couleurs sur IP en utilisant un protocole de contrôle d'appel indépendant du support, BICC, pourvu de moyens configurés pour :
recevoir une demande d'appel de service autonome envoyée par un équipement de l'utilisateur, établir une connexion avec un système de service de sonnerie à indication de couleurs, effectuer une négociation des supports avec le système de service de sonnerie à indication de couleurs, transmettre une tonalité d'invitation au service autonome envoyée depuis le système de service de sonnerie à indication de couleurs vers l'équipement de l'utilisateur, transmettre le contenu de l'opération de service de l'équipement de l'utilisateur au système de service de sonnerie à indication de couleurs après que l'équipement de l'utilisateur ait exécuté l'opération de service, et transmettre le contenu de l'opération de service traitée par le système de service de sonnerie à indication de couleurs à l'équipement de l'utilisateur après que le système de service de sonnerie à indication de couleurs ait traité le contenu de l'opération de service, et libérer la connexion avec le système de service de sonnerie à indication de couleurs après que l'équipement de l'utilisateur a raccroché ;
dans lequel le dispositif du réseau central comprend :
un serveur MSC, configuré pour établir une connexion de communication avec le système de service de sonnerie à indication de couleurs par l'intermédiaire d'une interface Nc et communiquer avec le système de service de sonnerie à indication de couleurs à l'aide du protocole BICC ; et
une passerelle multimédia, configurée pour effectuer une négociation multimédia d'un mode de codage de flux et d'un tarif avec le système de service de sonnerie à indication de couleurs à l'aide d'un protocole de plan d'utilisateur Iu par l'intermédiaire d'une interface Nb.
